(19) **Europäisches Patentamt / European Patent Office / Office européen des brevets**

(11) **EP 1 418 003 B1**

(12) **EUROPEAN PATENT SPECIFICATION**

(45) Date of publication and mention
of the grant of the patent:
**17.01.2007 Bulletin 2007/03**

(51) Int Cl.:
***B01L 3/00*** *(2006.01)*  ***B81B 3/00*** *(2006.01)*
***F04B 19/00*** *(2006.01)*

(21) Application number: **03256805.7**

(22) Date of filing: **28.10.2003**

(54) **Microfluidic pumping system**

Mikrofluidisches Pumpensystem

Pompe microfluidique

(84) Designated Contracting States:
**DE FR GB NL**

(30) Priority: **31.10.2002 US 286092**

(43) Date of publication of application:
**12.05.2004 Bulletin 2004/20**

(73) Proprietor: **Hewlett-Packard Development Company, L.P.**
**Houston, TX 77070 (US)**

(72) Inventor: **Blakley, Daniel Robert**
**Philomath, OR 97370 (US)**

(74) Representative: **Jackson, Richard Eric et al**
**Carpmaels & Ransford,**
**43 Bloomsbury Square**
**London WC1A 2RA (GB)**

(56) References cited:
**WO-A-02/064821**  **US-A- 6 010 316**
**US-A1- 2001 055 529**  **US-B1- 6 210 128**

**Description**

BACKGROUND

Recent advances in fluidic technology have led to the development of integrated chemical and biological analytical devices that place both electrical and fluidic systems on a single substrate. These devices sometimes are referred to as "laboratory-on-a-chip" devices, and may offer advantages over the use of larger, traditional analytical devices. For example, integrated analytical devices may consume smaller quantities of reagents and/or solvents, may occupy a smaller footprint in a laboratory, and/or may be easier to adapt for use in the field.

Fully or partially integrated chemical and biological analytical systems typically include a microfluidic network for moving fluids through the system. The term "microfluidic" typically refers to systems and processes for moving fluids through very small channels, for example, with micron-scale diameters. A microfluidic network may include a wide variety of components, including, but not limited to, valves for controlling access to fluid channels, mixers for mixing reaction components and/or carrier fluids, and pumps for moving fluids through the network.

Various types of pumps are known for use in microfluidics systems. For example, some microfluidics systems utilize mechanical pumps that move fluids through the system via mechanically created pressure differentials. However, such pumping devices may be difficult to fabricate, and also may be damaged by impurities in the sample. Other microfluidics systems may utilize electroosmotic pumping devices, in which an electric field is used to drive a polar fluid through a channel. However, these systems may utilize a high voltage (on the order of kilovolts) to drive movement of the fluid, and may be sensitive to impurities that adsorb to the wall of the channel. Furthermore, electroosmotic pumping devices may not be able to pump effectively nonpolar or only slightly polar solvents. Acoustic micropumps are also known (US-A-6 010 316).

SUMMARY

The present invention provides a microfluidic device including a fluidic pumping system as claimed in claim 1. The fluidic pumping system includes a fluid-carrying channel, a plurality of acoustic pumping elements arranged along the fluid-carrying channel, wherein the acoustic pumping elements are configured to form an acoustic wave focused within the channel, and a controller in electrical communication with the plurality of acoustic pumping elements, the controller being configured to activate the acoustic pumping elements in such a manner as to cause the acoustic wave to move along the channel to move the fluid through the channel. Further the present invention provides a method of transporting a fluid as claimed in claim 8.

BRIEF DESCRIPTION OF THE DRAWINGS

Fig. 1 is a block diagram of an integrated analytical device according to an embodiment of the present invention.
Fig. 2 is an isometric view of a pumping system of the microfluidic network of the embodiment of Fig. 1.
Fig. 3 is a front sectional view of a pumping element taken along line 3-3 of Fig. 2.
Fig. 4 is a side sectional view of a plurality of pumping elements taken along line 4-4 of Fig. 2.
Fig. 5 is an isometric view of a pumping system according to a second embodiment of the present invention.
Fig. 6 is a front sectional view of a pumping element taken along line 6-6 of Fig. 5.
Fig. 7 is a side sectional view of a plurality of pumping elements taken along line 7-7 of Fig. 5.
Fig. 8 is a block diagram of an exemplary control system suitable for use with a pumping system according to the present invention.

DETAILED DESCRIPTION

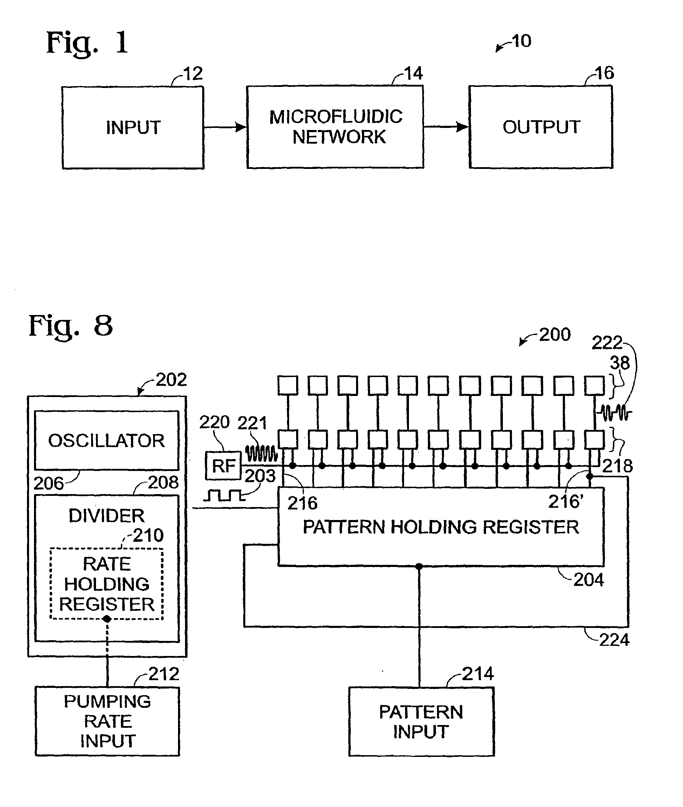

Fig. 1 shows, generally at 10, a simplified block diagram of a microfluidic device according to an embodiment of the present invention. Microfluidic device 10 includes an input 12, a microfluidic network 14, and an output 16.

Input 12 is configured serve as an interface between microfluidic network 14 and macroscopic components positioned upstream of the microfluidic network in an overall process flow, and may be configured to accept the introduction of one or more fluids into device 10. Any suitable fluid may be introduced into microfluidic device 10 via input 12. Examples include, but are not limited to, biological or chemical samples contained within a liquid- or gas-phase carrier, and solvents, reagents, and other chemical components.

Input 12 may include a single input for receiving a single analytical sample mixture, or may include multiple individual inputs for receiving a plurality of substances. For example, input 12 may include a plurality of sample inputs that allow multiple samples to be introduced simultaneously to microfluidic device 10 for sequential or parallel processing. Input 12 may also include a plurality of reagent inputs configured to introduce one or more reagents for reaction with a sample. Furthermore, input 12 may include electrical inputs configured to accept electrical signals for controlling and/or powering the various components of microfluidic network 14.

Likewise, output 16 is configured to serve as an interface between microfluidic network 14 and macroscopic components that are positioned downstream of the microfluidic network in an overall process flow. Output 16 may include both electrical and fluidic outputs. For example, output 16 may include a fluidic output configured to deposit waste fluids into a waste receptacle, or to route fluids into analytical instruments after processing within microfluidic network 14. Output 16 may also include electrical outputs configured to output electrical signals. Examples of electrical signals that may be output from microfluidic network 14 include, but are not limited to, raw or processed data signals from an integrated sensor and/or circuit formed within microfluidic network 14.

Microfluidic network 14 may have any desired selection and arrangement of microfluidic components suitable for performing a selected task. Exemplary components that may be included in microfluidic network 14 include, but are not limited to, mixers, storage chambers, separation columns, and channels, valves and pumping systems for connecting the various components.

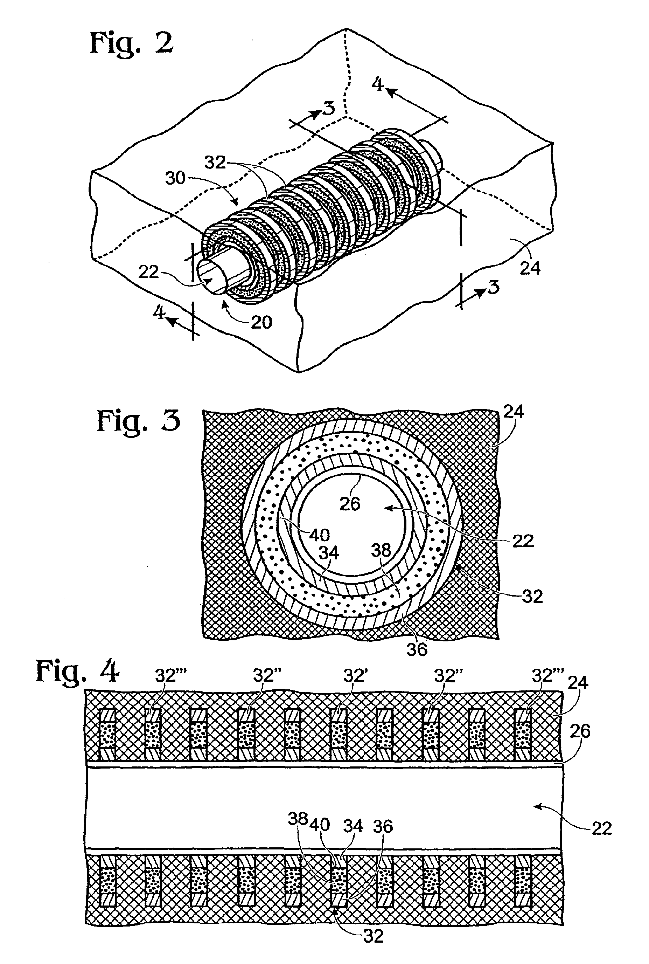

Fig. 2 shows, generally at 20, an exemplary channel structure and, generally at 30, a pumping system from microfluidic network 14 for moving a fluid through the microfluidic network. Channel structure 20 includes a fluid-carrying channel 22 formed within a substrate 24 that is configured to carry a fluid between components within microfluidic network 14. Channel structure 20 may also include a corrosion-resistant material 26 (Fig. 3) to protect the inner surfaces of the channel from corrosive fluids. Alternatively, channel structure may not include material 26 on its inner surface, if the fluids being pumped are not significantly corrosive to the materials used to form channel structure 20. In these embodiments, the inner surface of the channel may be at least partially formed by pumping elements 32 of pumping system 30, which are described in more detail below. Pumping system 30 is configured to move fluids through channel 22 via the formation of focused acoustic waves within the channel. Pumping system 30 may also be configured to move the acoustic waves along the length of channel 22 to create a peristaltic pumping effect. To form the acoustic waves, pumping system 30 includes a plurality of individual pumping elements 32 disposed along the length of channel 22. While Fig. 2 shows nine pumping elements 32 spaced evenly along the length of channel 22, it will be appreciated that any suitable number of pumping elements may be disposed along the length of the channel. Furthermore, while the depicted pumping elements 32 are evenly spaced along the length of channel 22, the pumping elements may also be spaced in any other manner along the length of the channel suitable to cause an acoustic wave to be focused at a desired location within the channel.

Pumping elements 32 are shown in more detail in Figs. 3-4. Each pumping element includes an inner electrode 34, an outer electrode 36, and a piezoelectric element 38 positioned between the inner and outer electrodes. The depicted pumping elements have a ring-shaped configuration, and concentrically surround channel 22. The application of a voltage pulse across piezoelectric element 38 via inner electrode 34 and outer electrode 36 causes the piezoelectric element to change physical dimensions, which thus creates a ring-shaped acoustic wave. The pulse may be of a constant voltage, or may be of a periodic voltage. Where a pulse of a periodic voltage is used to activate pumping elements 32, the acoustic energy from one or more pumping elements 32 may constructively add at a selected location within channel 22, herein after referred to as the "focal region," to form a focused acoustic wave within the channel via acoustic Fresnel diffraction. It will be appreciated that, where protective material 26 is used to coat the interior of channel 22, the layer of material 26 may be segmented in some manner to form expansion joints to allow the material to withstand the contractions and expansions of piezoelectric elements 38.

When an acoustic wave formed by one or more pumping element 32 is focused in channel 22, the pressure at the focal region is increased relative to the areas within channel 22 adjacent the focal region. This increase in local pressure at the focal region may drive a fluid within channel 22 away from the focal region. In this manner, a fluid may be moved along channel 22 by applying a pattern of pulses to the plurality of pumping elements 32 in a progressive manner along the length of channel 22.

The plurality of pumping elements 32 may be activated in any number of different patterns and/or manners to form a focused acoustic wave within channel 22. Where it is desired to position the focal region at the center of channel 22, a plurality of elements, each with a spacing of a multiple of one acoustic wavelength from the desired focal region, may be simultaneously activated. For example, in the embodiment depicted in Fig. 4, elements 32', 32" and 32'" may be simultaneously activated, and if they are spaced such that they are located multiples of one wavelength from a focal region within channel 22 (for example, in the plane of element 32'), a focused acoustic wave will be formed in the channel at the focal region. Thus, where the sum of the radius of channel 22, the thickness of corrosion-proof material 26, and the thickness of inner electrode 34 is approximately 10 microns, and where channel 22 is configured to contain pure water (velocity of longitudinal waves in pure water is approximately 1480 m/s), then the application of a pulse containing a signal with a frequency of approximately 148 MHz may cause the production of a primary acoustic wave with a wavelength of approximately 10 microns, and thus having a focal region in the plane of the element that produced the primary wave. Other elements spaced multiples of this wavelength from the focal region may be simultaneously activated to add constructively with the primary wave, and thus to form a focused wave at the focal region.

Likewise, the focal region may be located at any other desired point within channel 22, either along the length of or radially between the center and side of, channel 22 by selecting suitable combinations of elements which are simultaneously activated according to the following relationship (for a "positive" Fresnel Half-Wave Band pattern having a concentric electrode pattern with an open center; other relationships may describe other electrode patterns):

$$\sqrt{r_n^2 + F^2} - F = \frac{n\lambda_l}{4}$$

where $r_n$ is the inner radius of a selected piezoelectric element 38, F is the focal length of the selected piezoelectric element, $\lambda_l$ is the wavelength of the acoustic wave formed by the selected piezoelectric element at a selected RF frequency, and n = 1,3,5, .... Alternatively, the location of the focal region within channel 22 may also be varied by varying the frequency of the RF power applied to the piezoelectric element 38.

Inner electrode 34, outer electrode 36 and piezoelectric element 38 may have any suitable dimensions. For example, inner electrode 34, outer electrode 36 and piezoelectric element 38 may each have a width (along the flow direction of channel 22), as narrow as 1-2 microns, as wide as 10-20 microns, or outside of these ranges.

Inner electrode 34, outer electrode 36 and piezoelectric element 36 may also have any desired thickness (along the radial direction of channel 22). For example, inner electrode 35 may have a thickness selected on the basis of how far the inner surface 40 of piezoelectric element 38 is to be located from the center of the channel to position the focal region in a desired location within channel 22. Furthermore, in some embodiments of the invention (described in more detail below), each pumping element 32 may include more than one piezoelectric element. In this situation, the radial thickness of each piezoelectric element and associated electrode pair may be chosen to provide resonance at a more desirable resonant frequency (which is determined by the materials used to form each pumping element, and the thickness of the materials).

Inner electrode 34 and outer electrode 36 may be made from any suitable material. For example, inner electrode 34 and outer electrode 36 may be made from an electrically conductive material selected for its compatibility with a desired manufacturing process. Where inner electrode 34 and outer electrode 36 are made from a material that is resistant to the fluids that are to flow through channel 22, corrosion-resistant layer 36 may be omitted if desired. Examples of suitable materials for inner electrode 34 and outer electrode 36 include, but are not limited to, aluminum, copper, gold, and other electrically conductive materials.

Likewise, piezoelectric element 38 may be made from any suitable piezoelectric material. Examples of suitable materials include, but are not limited to, zinc oxide, quartz, lithium niobate, and lithium titanate. The piezoelectric material used to construct piezoelectric element 38 may be deposited or otherwise formed in any suitable orientation. For example, where piezoelectric element 38 is formed from zinc oxide, the [111] orientation of the zinc oxide may be directed toward the center of channel 22 to direct the acoustic wave toward the center of the channel in the plane of pumping element 32.

Each pumping element 32 may be spaced from adjacent pumping elements 32 by any suitable distance. For example, the spacing of pumping elements 32 may be configured cause the acoustic energy emitted by selected elements to constructively interfere at a desired location by acoustic fresnel focusing. Where RF energy is used to activate pumping elements 32, exemplary distances include, but are not limited to, those in the range of two to six microns. The distance separating adjacent pumping elements 32 may possibly depend upon the desired mode of operation of the pumping elements. For example, adjacent pumping elements 32 may be configured to have different focal points in different locations within channel 22. In this manner, multiple adjacent pumping elements 32 may be activated simultaneously to create a progressively pinched focal region in the direction of fluid flow in the channel by effectively forming a pressure gradient. Likewise, multiple pumping elements 32 may be activated simultaneously to create a larger area of increased pressure within channel 32.

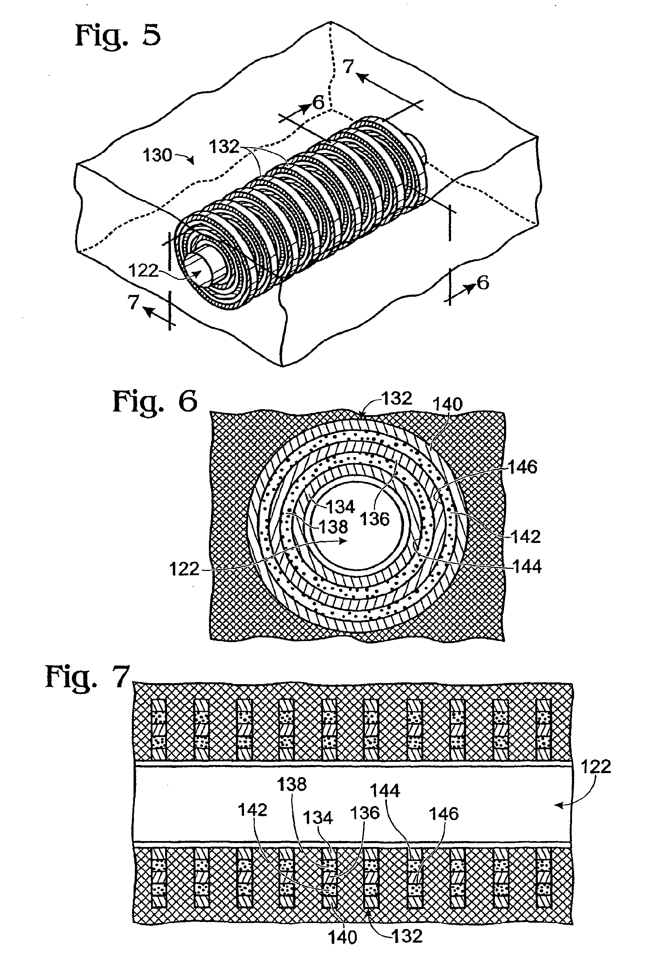

Figs. 5-7 show, generally at 130, a second embodiment of a pumping system suitable for use in microfluidic network 14. Pumping system 130 is similar to pumping system 30 in that a series of piezoelectric pumping elements are arranged along the length of a fluid-carrying channel 122 to move a fluid through the channel. Each pumping element 132 may be activated to form an acoustic pressure wave focused at a selected location within the interior of channel 122, and more than one adjacent pumping element may be activated simultaneously as desired to obtain the desired focused acoustic wave. Also, the pattern of activated pumping elements 132 may be shifted along the length of channel 122 to cause the acoustic pressure wave to move along the channel, and thus to move a fluid through the channel via a peristaltic pumping effect.

However, unlike pumping elements 32, pumping elements 132 each include two concentric piezoelectric elements. Referring to Figs. 6-7, each pumping element 132 includes an inner electrode 134, an intermediate electrode 136, an inner piezoelectric element 138 disposed between the inner electrode and intermediate electrode, an outer electrode 140, and an outer piezoelectric element 142 disposed between the intermediate electrode and the outer electrode.

Pumping system 130 may be operated in different manners to create different pumping effects. For example, a single voltage pulse may be applied simultaneously across inner piezoelectric element 138 and outer piezoelectric element 142. Where the geometries of inner piezoelectric element 138 and outer piezoelectric element 142 are configured to cause the pressure waves from each piezoelectric element to constructively interfere at the same focal region within channel 122, a more powerful pressure wave may be produced relative to the single piezoelectric configuration of pumping elements 32. Alternatively, inner piezoelectric element 138 and outer piezoelectric element 142 may be configured to be individually controllable.

Each of inner electrode 134, intermediate electrode 136, inner piezoelectric element 138, outer electrode 140 and outer piezoelectric element 142 may have any suitable dimensions. For example, the spacing between adjacent pumping elements, and the width of each individual pumping element, may have values within the ranges discussed above for pumping elements 32.

Likewise, inner electrode 134, intermediate electrode 136, inner piezoelectric element 138, outer electrode 140 and outer piezoelectric element 142 each may have any suitable thickness in the radial direction. To avoid problems with destructive interference, the thickness of each of these elements may be selected to set the distances from the inner surface 144 of inner piezoelectric element 138, and from the inner surface 146 of outer piezoelectric element 142, a multiple of the wavelength of the acoustic wave generated by the piezoelectric elements. Because outer piezoelectric element 142 is located farther from the inner wall of channel 122, the different velocities at which the acoustic wave generated by the outer piezoelectric element may travel through the different piezoelectric and electrode layers before reaching channel 120 may need to be taken into account when calculating the location of the focal region.

While the embodiments of Figs. 2-7 depict pumping elements 32 and 132 having one or two concentric piezoelectric elements, respectively, a pumping element according to the present invention may have three, or even more, concentric piezoelectric elements if desired. Also, while the individual pumping elements are shown as being generally circular in shape, it will be appreciated that the pumping elements may have any other suitable shape, including but not limited to, rectangular or triangular. Furthermore, while the piezoelectric elements of each of the depicted embodiments concentrically surround the associated fluid-carrying channel, the piezoelectric elements may have any other suitable geometric relationship to the fluid-carrying channel and to each other.

Fig. 8 shows, generally at 200, a block diagram of an exemplary control system suitable for use with a pumping system according to the present invention. While control system 200 is described below in the context of pumping system 30, it will be appreciated that the discussion applies equally to pumping system 130, or any other suitable pumping system. Control system 200 is configured to create a focused acoustic pressure wave of a fixed profile within channel 22 by activating selected pumping elements 32, and also to move the focused pressure wave along the length of channel 22 to create a peristaltic pumping effect.

Pumping system 200 includes various components that cooperate to create the focused pressure wave and peristaltic pumping effect. First, pumping system 200 includes a programmable rate oscillator, indicated generally at 202. Programmable rate oscillator 202 outputs a pulse train 203 at a selected rate, as described in more detail below, to set a pumping rate. The rate may be user-selected, or specified by system programming. Second, pumping system 200 includes a pattern holding register 204 for holding data representing a selected profile for the focused pressure wave, and for shifting the selected profile along the length of channel 22 at the rate determined by programmable rate oscillator 202 to create the peristaltic pumping effect.

Programmable rate oscillator 202 includes a master oscillator 206 for creating a master clock pulse, and a programmable divider 208 for reducing the frequency of the clock pulse to a selected frequency. Programmable rate oscillator also may include a rate holding register 210 that holds data representing the selected output frequency. Rate holding register 210 may be configured to accept input of a selected pumping rate from a user via pumping rate input device 212, or may contain data representing a fixed pumping rate.

Likewise, pattern holding register 204 may be connected to a pattern input 214 that allows a user to input a selected focal pattern or profile. The focal pattern contains data that sets the shape of the focal pattern to be formed in channel 22. The focal pattern may include any data suitable for forming a selected focal pattern. For example, the focal pattern may include data representing which piezoelectric elements 38 of the plurality of piezoelectric elements are to be simultaneously activated at any selected time.

Furthermore, in some embodiments of the invention, the location of the focal region of each piezoelectric element 38 may be selectively variable. The focal region of a selected piezoelectric element 38 may be varied in any suitable manner. For example, the frequency of the signal contained within the voltage pulse that activates the piezoelectric element may be varied, or different pumping elements may be activated to cause constructive interference at different locations, radial or lengthwise, within the channel. Where the frequency of the signal is varied, the focal pattern held within pattern holding register 204 may include data that indicates the frequency of the activation pulse to be sent to each piezoelectric element.

Pattern holding register 204 may also include a plurality of outputs 216 for providing signals to a set of piezoelectric drivers 218, indicating which piezoelectric elements are to be activated. Each output 216 is in electrical communication with a corresponding piezoelectric driver 218, and each piezoelectric driver is in electrical communication with a corresponding piezoelectric element 38. Each piezoelectric driver 218 is also in electrical communication with a periodic signal source, such as an RF source 220, that outputs a periodic signal 221 of a selected frequency or frequencies. Activation of a selected piezoelectric driver 218 by pattern holding register 204 causes the piezoelectric driver to send a conditioned RF pulse 222 from RF source 220 to the corresponding piezoelectric element 38. This causes the corresponding piezoelectric element 38 to produce an acoustic pressure wave within channel 22. The pulse width of the pulses in pulse train 203 from programmable rate oscillator 202 typically sets the width of RF pulse 222 sent to the piezoelectric elements. Alternatively, piezoelectric drivers 218 may be configured to regulate this pulse width. While the frequency of pulse 222 is described herein as being in the radiofrequency spectrum, pulse 222 may have any other suitable frequency for forming an acoustic wave in a selected channel, depending upon the dimensions of the selected channel.

Pattern holding register 204 may also be configured to move the focal pattern along the length of channel 22. In this manner, the pressure wave formed by each pumping element 32 is moved along the interior of channel 22 to push a fluid through channel 22. Pattern holding register 204 may be configured to shift the focal pattern along the length of channel 22 in any suitable manner. For example, pattern holding register 204 may act as a shift register and move the signal at each output 216 of the pattern holding register to the next adjacent output with each pulse from programmable rate oscillator 202. Alternatively, pattern holding register 204 may be configured to shift the signal at each output 216 by more than one position with each pulse from programmable rate oscillator 202 if desired.

Furthermore, if a continuous pumping action is desired, control system 200 may be configured to shift the selected focal pattern repeatedly along the length of channel 22. The repeated shifting of the selected focal pattern along the length of channel 22 may be accomplished in any suitable manner. In the depicted embodiment, the signal at the last output 216' of pattern holding register 204 may be fed back into the pattern holding register, as indicated at 224, to be applied to a more-upstream output 216. In this configuration, as each output signal of the focal pattern is shifted to the most-downstream output, the output signal is automatically fed back to an earlier output to begin a new movement along channel 22. In this manner, the focal pattern may be continuously recirculated to an upstream point of channel 22, and thus repeatedly shifted along the length of the channel to create a continuous pumping effect. It will be appreciated that the pumping direction of pumping system 32 may be reversed simply by reversing the direction pattern holding register 204 moves the focal pattern moves along channel 22.

Although the present disclosure includes specific embodiments, specific embodiments are not to be considered in a limiting sense, because numerous variations are possible. The subject matter of the present disclosure includes all novel and nonobvious combinations and subcombinations of the various elements, features, functions, and/or properties disclosed herein. The following claims particularly point out certain combinations and subcombinations regarded as novel and nonobvious. These claims may refer to "an" element or "a first" element or the equivalent thereof. Such claims should be understood to include incorporation of one or more such elements, neither requiring nor excluding two or more such elements.

## Claims

1. An integrated microfluidic device (10) having a fluidic pumping system (30) for transporting a fluid through the device, the fluidic pumping system (30) comprising: a fluid-carrying channel (22) formed in the device (10); a plurality of acoustic pumping elements (32) disposed along the fluid-carrying channel (22), wherein the acoustic pumping elements (32) are configured to form an acoustic pressure wave focused within the channel (22); and a controller (200) in electrical communication with the plurality of acoustic pumping elements (32), the controller (200) being configured to activate the acoustic pumping elements (32) in such a manner as to cause the acoustic wave (22) to move along the channel (22) to move the fluid through the channel (22).

2. The microfluidic device (10) of claim 1, wherein the controller (200) is configured to activate the acoustic pumping elements (32) by supplying pulses of RF power to the acoustic pumping elements (32).

3. The microfluidic device (10) of claim 1, wherein each acoustic pumping element (32) of the plurality of acoustic pumping elements (32) includes a piezoelectric element (32) having a layer of piezoelectric material (38) disposed between a pair of electrodes (34), (36).

4. The microfluidic device (10) of claim 3, wherein each piezoelectric element (32) concentrically surrounds the channel (22).

5. The microfluidic device (10) of claim 3, wherein each piezoelectric element (132) includes a plurality of layers of piezoelectric material (138), (142), each layer of piezoelectric material (138), (142) being disposed between a complementary pair of electrodes (134), (136), (140).

6. The microfluidic device (10) of claim 3, the channel (22) having a radial inner dimension, wherein selected piezoelectric elements (32) may be activated to form the focused acoustic wave at a focal region at a location within the channel (22), wherein the location of the focal region is configured to be positionally variable across the radial inner dimension of the channel (22), wherein a plurality of piezoelectric elements (32) are simultaneously activated to create a plurality of corresponding acoustic waves that constructively interfere at the focal region, and wherein the location of the focal region is varied by varying which of the plurality of piezoelectric elements (32) are simultaneously activated.

7. The microfluidic device (10) of claim 1, wherein the controller (200) includes a pattern holding register (204) in electrical communication with the plurality of acoustic elements (32), the pattern holding register (204) being configured to store data representing a preselected focal pattern that indicates the piezoelectric elements to be activated at a selected time, and wherein the pattern holding register (204) is configured to selectively shift the focal pattern along the plurality of acoustic pumping elements (32) in a progressive manner to create a peristaltic pumping effect.

8. A method of transporting a fluid in a device (10), the device (10) including a channel (22) configured to accommodate passage of the fluid and a plurality of acoustic pumping elements (32) disposed along the channel, each acoustic pumping element (32) having a focal region positioned within the channel (32), the method comprising: applying a focal pattern to the plurality of acoustic pumping elements (32), the focal pattern defining a selected subset of the plurality of acoustic pumping elements (32) to be activated simultaneously to create a pressure wave within the channel (22); and shifting the focal pattern by at least one acoustic pumping element (32) to move the pressure wave along the channel (22).

**Patentansprüche**

1. Eine integrierte Mikrofluidvorrichtung (10) mit einem Fluidpumpsystem (30) zum Transportieren eines Fluids durch die Vorrichtung, wobei das Fluidpumpsystem (30) folgende Merkmale aufweist: einen Fluidträgerkanal (22), der in der Vorrichtung (10) gebildet ist; eine Mehrzahl akustischer Pumpelemente (32), die entlang des Fluidträgerkanals (22) angeordnet sind, wobei die akustischen Pumpelemente (32) konfiguriert sind, um eine akustische Druckwelle zu bilden, die innerhalb des Kanals (22) fokussiert ist; und eine Steuerung (200), die in elektrischer Kommunikation mit der Mehrzahl akustischer Pumpelemente (32) steht, wobei die Steuerung (200) konfiguriert ist, um die akustischen Pumpelemente (32) in einer derartigen Weise zu aktivieren, um zu bewirken, dass sich die akustische Welle (22) entlang des Kanals (22) bewegt, um das Fluid durch den Kanal (22) zu bewegen.

2. Die Mikrofluidvorrichtung (10) gemäß Anspruch 1, bei der die Steuerung (200) konfiguriert ist, um die akustischen Pumpelemente (32) zu aktivieren, indem Pulse einer HF-Leistung an die akustischen Pumpelemente (32) geliefert werden.

3. Die Mikrofluidvorrichtung (10) gemäß Anspruch 1, bei der jedes akustische Pumpelement (32) der Mehrzahl akustischer Pumpelemente (32) ein piezoelektrisches Element (32) umfasst, das eine Schicht eines piezoelektrischen Materials (38) aufweist, die zwischen einem Paar von Elektroden (34), (36) angeordnet ist.

4. Die Mikrofluidvorrichtung (10) gemäß Anspruch 3, bei der jedes piezoelektrische Element (32) den Kanal (22) konzentrisch umgibt.

5. Die Mikrofluidvorrichtung (10) gemäß Anspruch 3, bei der jedes piezoelektrische Element (132) eine Mehrzahl von Schichten eines piezoelektrischen Materials (138), (142) umfasst, wobei jede Schicht eines piezoelektrischen Materials (138), (142) zwischen einem komplementären Paar von Elektroden (134), (136), (140) angeordnet ist.

6. Die Mikrofluidvorrichtung (10) gemäß Anspruch 3, wobei der Kanal (22) eine Radialinnenabmessung aufweist, wobei ausgewählte piezoelektrische Elemente (32) aktiviert werden könnten, um die fokussierte akustische Welle in einer Fokusregion an einem Ort innerhalb des Kanals (22) zu bilden, wobei der Ort der Fokusregion konfiguriert ist, um positionsmäßig über die Radialinnenabmessung des Kanals (22) hinweg variabel zu sein, wobei eine Mehrzahl piezoelektrischer Elemente (32) gleichzeitig aktiviert wird, um eine Mehrzahl entsprechender akustischer Wellen zu erzeugen, die konstruktiv in der Fokusregion interferieren, und wobei der Ort der Fokusregion durch ein Variieren dessen, welche der Mehrzahl piezoelektrischer Elemente (32) gleichzeitig aktiviert werden, variiert wird.

7. Die Mikrofluidvorrichtung (10) gemäß Anspruch 1, bei der die Steuerung (200) ein Strukturhalteregister (204) umfasst, das in elektrischer Kommunikation mit der Mehrzahl akustischer Elemente (32) steht, wobei das Strukturhalteregister (204) konfiguriert ist, um Daten zu speichern, die eine vorausgewählte Fokusstruktur darstellen, die die zu einer ausgewählten Zeit zu aktivierenden piezoelektrischen Elemente anzeigt, und wobei das Strukturhalteregister (204) konfiguriert ist, um selektiv die Fokusstruktur entlang der Mehrzahl akustischer Pumpelemente (32) in einer progressiven Weise zu verschieben, um einen peristaltischen Pumpeffekt zu erzeugen.

8. Ein Verfahren zum Transportieren eines Fluids in einer Vorrichtung (10), wobei die Vorrichtung (10) einen Kanal (22), der konfiguriert ist, um einen Durchgang des Fluids unterzubringen, und eine Mehrzahl akustischer Pumpelemente (32), die entlang des Kanals (22) angeordnet sind, wobei jedes akustische Pumpelement (32) eine Fokusregion aufweist, die innerhalb des Kanals (22) positioniert ist, umfasst, wobei das Verfahren folgende Schritte aufweist: Anwenden einer Fokusstruktur auf die Mehrzahl akustischer Pumpelemente (32), wobei die Fokusstruktur einen ausgewählten Teilsatz der Mehrzahl gleichzeitig zu aktivierender akustischer Pumpelemente (32) definiert, um eine Druckwelle innerhalb des Kanals (22) zu erzeugen; und Verschieben der Fokusstruktur um zumindest ein akustisches Pumpelement (32), um die Druckwelle entlang des Kanals (22) zu bewegen.

## Revendications

1. Dispositif microfluidique intégré (10) comportant un système de pompage fluidique (30) pour transporter un fluide à travers le dispositif, le système de pompage fluidique (30) comprenant : un canal de transport de fluide (22) formé dans le dispositif (10) ; une pluralité d'éléments de pompage acoustique (32) disposés le long du canal de transport de fluide (22), dans lequel les éléments de pompage acoustique (32) sont configurés de manière à former une onde de pression acoustique focalisée dans le canal (22) ; et un contrôleur (200) en communication électrique avec la pluralité d'éléments de pompage acoustique (32), le contrôleur (200) étant configuré pour activer les éléments de pompage acoustique (32) de telle manière à provoquer le déplacement de l'onde acoustique (22) le long du canal (22) pour déplacer le fluide à travers le canal (22).

2. Dispositif microfluidique (10) selon la revendication 1, dans lequel le contrôleur (200) est configuré pour activer les éléments de pompage acoustique (32) en fournissant des impulsions d'énergie RF aux éléments de pompage acoustique (32).

3. Dispositif microfluidique (10) selon la revendication 1, dans lequel chaque élément de pompage acoustique (32) de la pluralité d'éléments de pompage acoustique (32) comporte un élément piézoélectrique (32) ayant une couche de matériau piézoélectrique (38) disposée entre deux électrodes (34), (36).

4. Dispositif microfluidique (10) selon la revendication 3, dans lequel chaque élément piézoélectrique (32) entoure le canal (22) de manière concentrique.

5. Dispositif microfluidique (10) selon la revendication 3, dans lequel chaque élément piézoélectrique (132) comporte une pluralité de couches de matériau piézoélectrique (138), (142), chaque couche de matériau piézoélectrique (138), (142) étant disposée entre deux électrodes complémentaires (134), (136), (140).

6. Dispositif microfluidique (10) selon la revendication 3, le canal (22) ayant une dimension radiale interne, dans lequel des éléments piézoélectriques sélectionnés (32) peuvent être activés pour former l'onde acoustique focalisée dans une région focale à un emplacement situé à l'intérieur du canal (22), dans lequel l'emplacement de la région focale est configuré de façon que sa position soit variable d'un bout à l'autre de la dimension radiale interne du canal (22), dans lequel une pluralité d'éléments piézoélectriques (32) sont activés simultanément pour créer une pluralité d'ondes acoustiques correspondantes qui interfèrent de manière constructive au niveau de la région focale et dans lequel on fait varier l'emplacement de la région focale en faisant varier les éléments de la pluralité d'éléments piézoélectriques (32) qui sont activés simultanément.

7. Dispositif microfluidique (10) selon la revendication 1, dans lequel le contrôleur (200) comporte un registre de mémorisation de motif (204) en communication électrique avec la pluralité d'éléments acoustiques (32), le registre de mémorisation de motif (204) étant configuré pour enregistrer des données représentant un motif focal sélectionné à l'avance qui indique les éléments piézoélectriques à activer à un moment sélectionné et dans lequel le registre de mémorisation de motif (204) est configuré pour déplacer de manière sélective le motif focal le long de la pluralité d'éléments de pompage acoustique (32) d'une manière progressive pour créer un effet de pompage péristaltique.

8. Procédé de transport d'un fluide dans un dispositif (10), le dispositif (10) comportant un canal (22) configuré pour admettre le passage du fluide et une pluralité d'éléments de pompage acoustique (32) disposés le long du canal, chaque élément de pompage acoustique (32) ayant une région focale positionnée dans le canal (32), le procédé comprenant : l'application d'un motif focal à la pluralité d'éléments de pompage acoustique (32), le motif focal définissant un sous-ensemble sélectionné de la pluralité d'éléments de pompage acoustique (32) à activer simultanément pour créer une onde de pression dans le canal (22) ; et déplacer le motif focal d'au moins un élément de pompage acoustique (32) pour déplacer l'onde de pression le long du canal (22).

# Fig. 1

```
        ⌐12                    ⌐14                    ⌐16
┌──────────────┐       ┌──────────────┐       ┌──────────────┐
│              │       │ MICROFLUIDIC │       │              │
│    INPUT     │  ───► │   NETWORK    │  ───► │    OUTPUT    │
│              │       │              │       │              │
└──────────────┘       └──────────────┘       └──────────────┘
```

# Fig. 8

# Fig. 2

# Fig. 3

# Fig. 4

## Fig. 5

## Fig. 6

## Fig. 7